(19) Europäisches Patentamt / European Patent Office / Office européen des brevets

(11) **EP 2 377 716 B1**

(12) **FASCICULE DE BREVET EUROPEEN**

(45) Date de publication et mention
de la délivrance du brevet:
**05.06.2019  Bulletin 2019/23**

(51) Int Cl.:
***B60M 3/00*** *(2006.01)*      ***H02G 7/16*** *(2006.01)*

(21) Numéro de dépôt: **11305440.7**

(22) Date de dépôt: **14.04.2011**

(54) **Procédé de dégivrage d'une ligne d'alimentation de véhicules ferroviaires**

Verfahren zur Enteisung einer Stromversorgungslinie von Schienenfahrzeugen

Method for de-icing a railway vehicle feeder cable

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **19.04.2010  FR 1052960**

(43) Date de publication de la demande:
**19.10.2011  Bulletin 2011/42**

(73) Titulaire: **ALSTOM Transport Technologies
93400 Saint-Ouen (FR)**

(72) Inventeur: **Bellegarde, Nicolas
94210, La Varenne Saint-Hilaire (FR)**

(74) Mandataire: **Lavoix
2, place d'Estienne d'Orves
75441 Paris Cedex 09 (FR)**

(56) Documents cités:
**EP-A1- 1 985 490      CN-A- 101 640 400
DE-A1- 10 337 937      US-A1- 2009 250 449**

## Description

La présente invention concerne un procédé de dégivrage d'une ligne d'alimentation électrique de véhicules ferroviaires, ladite ligne s'étendant entre au moins une première et une deuxième sous-stations réversibles aptes à fournir un courant électrique circulant sur la ligne d'alimentation électrique, la première sous-station étant commandée dans un mode de fourniture de courant, pour fournir un courant électrique à la ligne d'alimentation électrique et la deuxième sous-station étant commandée dans un mode de récupération de courant, pour récupérer le courant électrique de la ligne d'alimentation électrique et le renvoyer sur un réseau d'alimentation électrique.

En hiver ou dans les régions à faible température, il arrive fréquemment qu'il se forme une couche de glace sur des lignes d'alimentation électrique de véhicules ferroviaires. Or, le contact entre un pantographe de véhicule ferroviaire et une telle couche de glace engendre la formation d'arcs électriques ou l'impossibilité pour le véhicule de capter le courant. En outre, les lignes d'alimentation sont susceptibles de s'affaisser sous le poids de cette couche de glace ou de neige, paralysant le trafic ferroviaire. Il est donc important de pouvoir dégivrer les lignes d'alimentation électrique ou prévenir la formation de telles couches de glace de manière à éviter des perturbations du trafic ferroviaire.

Pour empêcher la formation de couches de glace sur la ligne d'alimentation, il est possible de faire passer, à intervalles réguliers, par exemple toutes les heures, des trains sur la ligne concernée, le contact entre le pantographe et la ligne d'alimentation empêchant le givrage de la ligne d'alimentation.

Un tel procédé ne donne pas entière satisfaction. En effet, il impose notamment de faire circuler des trains vides toute la nuit dans le seul but de prévenir la formation de glace, ce qui engendre des coûts importants.

Pour dégivrer la ligne d'alimentation, il est également possible de faire passer sur la ligne concernée un train râcleur muni d'archets spéciaux réalisant le dégivrage ou de mettre la ligne en court-circuit en la connectant au rail en utilisant un système électronique additionnel comportant par exemple des interrupteurs et des résistances pour créer un courant électrique et le maintenir à un certain niveau.

De tels procédés ne donnent pas entière satisfaction. En effet, ils demandent la mise en oeuvre d'équipements spécifiques, qui ne sont pas habituellement présents sur la ligne. En outre, la mise en court-circuit de la ligne d'alimentation électrique présente un danger pour les opérateurs et la population.

DE 103 37 937 A1 décrit un procédé de dégivrage d'un tronçon de ligne d'alimentation agencé entre deux sous-stations d'alimentation en faisant circuler entre ces sous-stations un courant de dégivrage.

Un but de l'invention est donc d'obtenir un procédé de dégivrage qui soit simple d'utilisation et peu coûteux à mettre en oeuvre.

A cet effet, l'invention a pour objet un procédé de dégivrage du type précité, caractérisé en ce qu'il comprend une étape d'établissement d'une différence de tension entre les bornes de sortie des première et deuxième sous-stations de sorte qu'un courant circule sur la ligne d'alimentation électrique entre la première sous-station et la deuxième sous-station et que la chaleur produite par la circulation du courant entraîne le dégivrage de la ligne d'alimentation entre la première et la deuxième sous-stations.

Ce procédé peut être mis en oeuvre sans équipement spécifique et piloté à distance, ce qui limite les coûts et facilite la maintenance de la ligne.

Le procédé selon l'invention peut comprendre l'une ou plusieurs des caractéristiques des revendications 2 à 8, prise(s) isolément ou suivant toute(s) combinaison(s) techniquement possible(s).

L'invention sera mieux comprise à la lecture de la description qui va suivre, donnée uniquement à titre d'exemple, et faite en se référant aux dessins annexés, sur lesquels :

- la figure 1 est une illustration schématique d'un réseau ferroviaire équipé de sous-stations apte à mettre en oeuvre le procédé de dégivrage selon l'invention ; et
- la figure 2 est une illustration schématique de la mise en oeuvre du procédé selon l'invention par le réseau ferroviaire de la figure 1.

L'invention s'applique à une ligne d'alimentation de véhicules ferroviaires à courant continu.

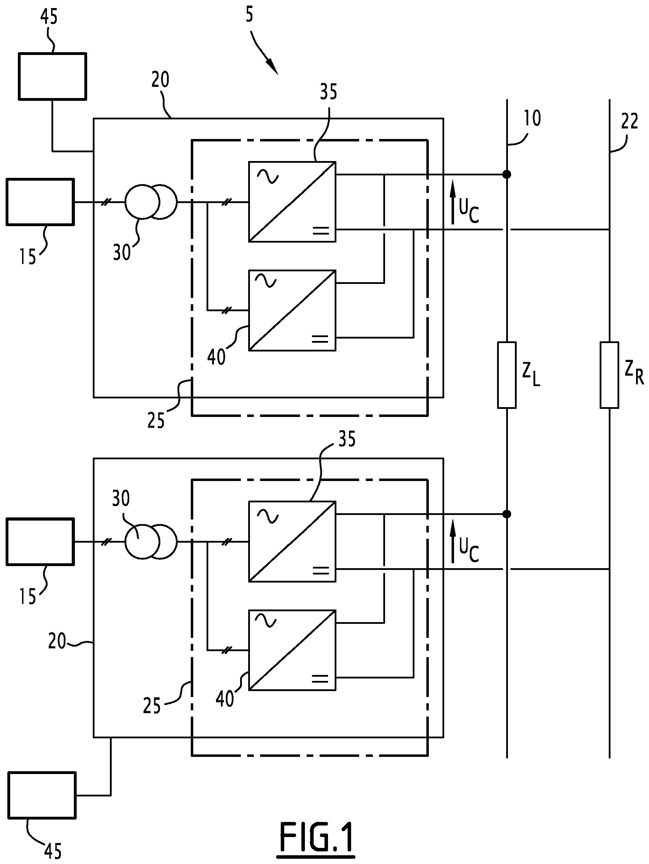

Le réseau ferroviaire à courant continu 5 représenté sur la figure 1 comporte une ligne d'alimentation électrique 10, reliée à un réseau d'alimentation électrique 15 par l'intermédiaire de sous-stations réversibles 20.

Par sous-station réversible, on entend une sous-station apte, dans un mode de fourniture de courant, à fournir du courant à la ligne d'alimentation électrique 10 et également apte, dans un mode de récupération de courant, à récupérer du courant de cette ligne d'alimentation 10, le courant récupéré étant par exemple issu du freinage d'un véhicule ferroviaire connecté à la ligne d'alimentation 10, et à le renvoyer sur le réseau d'alimentation électrique 15.

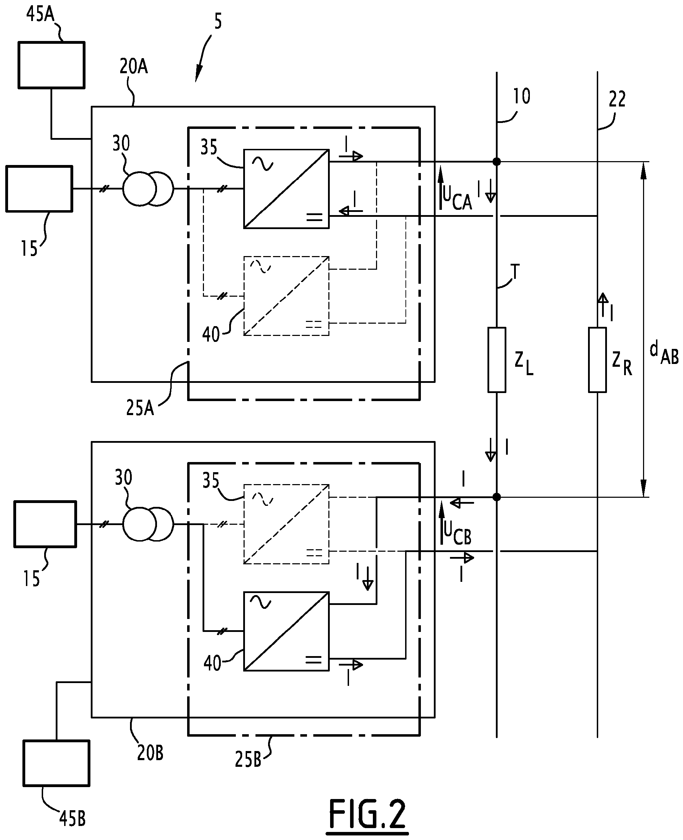

Le réseau ferroviaire 5 comporte un nombre n de sous-stations réversibles 20, réparties à intervalles réguliers le long de la ligne d'alimentation électrique 10. Pour simplifier les figures 1 et 2, seules deux sous-stations réversibles 20 ont été représentées.

Le réseau ferroviaire 5 comprend également un rail 22, sur lequel un véhicule ferroviaire est apte à circuler. Le rail 22 présente une impédance linéique nominale $Z_R$, par exemple égale à 18 m$\Omega$/km pour une voie standard à deux rails en parallèle. Ce rail 22 est relié électriquement aux sous-stations réversibles 20.

La ligne d'alimentation électrique 10 présente une impédance linéique nominale $Z_L$. Cette impédance linéique nominale $Z_L$ est par exemple de 0,05 Ω/km pour les lignes de contact aériennes et 0,02 Ω/km pour les lignes de contact au sol type 3$^{ème}$ rail en courant continu. La valeur de l'impédance linéique nominale $Z_L$ de la ligne d'alimentation électrique 10 est donnée par les spécifications de la ligne d'alimentation 10.

Le réseau d'alimentation électrique 15 est un réseau grande distance de distribution d'électricité. Il s'agit par exemple d'un réseau de tension alternative triphasée haute tension.

Les sous-stations réversibles 20 sont identiques les unes aux autres et seule l'une de ces sous-stations réversibles 20 sera décrite en détail.

La sous-station réversible 20 comporte un convertisseur de puissance réversible 25 quatre quadrants raccordé d'un côté au réseau d'alimentation électrique 15 et de l'autre côté à la ligne d'alimentation 10.

Un transformateur de traction 30 est disposé entre le convertisseur 25 et le réseau d'alimentation 15, de manière à abaisser la tension alternative issue du réseau d'alimentation 15 jusqu'à une tension alternative acceptée à l'entrée du convertisseur 25.

Le convertisseur 25 est un convertisseur réversible qui peut être, à titre d'exemple, composé d'un redresseur 35, relié en anti-parallèle à un onduleur 40. Le convertisseur réversible 25 est apte à fonctionner en mode redresseur ou en mode onduleur.

En mode redresseur, le convertisseur 25 est apte à redresser la tension alternative triphasée provenant du transformateur de traction 30 pour délivrer à sa sortie une tension continue redressée. Le convertisseur 25 est ainsi en mode de fourniture de courant.

En mode onduleur, le convertisseur 25 est apte à onduler la tension continue provenant de la ligne d'alimentation 10 pour délivrer à sa sortie une tension triphasée alternative. Le convertisseur 25 est ainsi en mode de récupération de courant.

Le convertisseur 25 est un convertisseur commandable. A cet effet, la sous-station 20 comporte un module de commande 45 apte à commander le basculement du convertisseur 25 du mode de récupération de courant vers le mode de fourniture de courant, c'est-à-dire du mode onduleur vers le mode redresseur et vice versa.

Le redresseur 35 est par exemple formé d'un pont redresseur commandé réalisé à partir de thyristors ou de transistors de puissance tels que des transistors IGBT (Insulated Gate Bipolar Transistor).

En variante non représentée, le redresseur 35 et l'onduleur 40 peuvent être intégrés dans le même équipement pour former le convertisseur réversible 25.

Le convertisseur réversible 25 est apte à générer à sa sortie, c'est-à-dire au point de connexion électrique de la sous-station 20 à la ligne d'alimentation 10, une tension $U_C$ désirée.

Une telle sous-station 20 est par exemple décrite dans le document EP-1 985 490.

Chaque sous-station 20 comporte en outre un dispositif de mesure de la tension $U_C$ à la sortie de la sous-station 20, ce dispositif étant apte à vérifier que la tension de sortie correspond à la tension $U_C$ commandée.

En outre, le réseau ferroviaire 5 comprend, au niveau de chaque sous-station 20, un dispositif de mesure de l'intensité I du courant circulant sur la ligne d'alimentation 10.

Selon une variante, le réseau ferroviaire 5 comporte en outre un ou plusieurs capteurs de température (non représentés), adaptés pour mesurer la température de la ligne d'alimentation électrique 10 ou des capteurs de température adaptés pour mesurer la température ambiante au voisinage de la ligne d'alimentation électrique 10.

Le procédé de dégivrage selon l'invention va maintenant être expliqué en référence à la figure 2.

Dans une première étape, l'opérateur choisit un tronçon T de la ligne d'alimentation 10 qu'il souhaite dégivrer.

Il détermine ensuite, dans une deuxième étape, la première sous-station 20A et la deuxième sous-station 20B entre lesquelles s'étend le tronçon T de la ligne d'alimentation 10 sélectionné dans la première étape. La première sous-station 20A et la deuxième sous-station 20B sont distantes d'une distance $d_{AB}$. La première sous-station 20A et la deuxième sous-station 20B sont par exemple des sous-stations adjacentes le long de la ligne d'alimentation 10. Il peut cependant également s'agir de sous-stations qui ne sont pas adjacentes et sont séparées entre elles par un nombre de sous-stations inférieur ou égal à n-2. Ainsi, la première sous-station 20A et la deuxième sous-station 20B peuvent par exemple être les sous-stations d'extrémité de la ligne d'alimentation électrique 10.

L'opérateur s'assure alors qu'aucun véhicule ferroviaire ne circule sur le tronçon T entre la première sous-station 20A et la deuxième sous-station 20B ou est sur le point d'arriver à la première ou à la deuxième sous-station 20A, 20B.

Dans une troisième étape, l'opérateur choisit un courant de dégivrage I, qu'il souhaite faire circuler sur la ligne d'alimentation 10, ainsi qu'une durée de circulation de ce courant I sur la ligne d'alimentation 10.

Il déduit alors du courant de dégivrage I choisi les tensions de sortie $U_{CA}$ et $U_{CB}$ correspondantes à appliquer respectivement à la sortie d'un premier convertisseur 25A de la première sous-station 20A et d'un deuxième convertisseur 25B de la deuxième sous-station 20B. Les tensions de sortie $U_{CA}$ et $U_{CB}$ sont différentes l'une de l'autre. La tension $U_{CA}$ est supérieure à la tension $U_{CB}$.

Dans une quatrième étape, l'opérateur commande, par l'intermédiaire d'un module de commande 45A de la première sous-station 20A, le fonctionnement du convertisseur 25A en mode fourniture de courant, c'est-à-dire en mode redresseur. Simultanément, il commande, par l'intermédiaire d'un module de commande 45B de la deuxième sous-station 20B, le fonctionnement du convertisseur 25B en mode récupération de courant, c'est-à-dire en mode onduleur.

Il s'établit ainsi une différence de tension D entre les sorties de la première sous-station 20A et de la deuxième sous-station 20B. Cette différence de tension D est égale à $U_{CA}$-$U_{CB}$. Cette différence de tension D est positive. Elle engendre la circulation d'un courant de dégivrage I sur la ligne d'alimentation 10 sur le tronçon T entre la première sous-station 20A et la deuxième sous-station 20B.

Cette différence de tension D doit rester inférieure à une valeur maximale définie par les normes en vigueur. Par exemple, pour une ligne d'alimentation à courant continu, la norme européenne impose une différence de tension D au maximum égale à 400V pour les véhicules ferroviaires fonctionnant à 600V, à 500V pour les véhicules ferroviaires fonctionnant à 750V, à 1000V pour les véhicules ferroviaires fonctionnant à 1500V et à 2000V pour les véhicules ferroviaires fonctionnant à 3000V.

Selon un mode de réalisation, dans une cinquième étape, le capteur de tension mesure la tension à la sortie de la première sous-station 20A et de la deuxième sous-station 20B, de manière à vérifier que cette tension est respectivement égale à la tension $U_{CA}$ et $U_{CB}$ de commande.

Du fait de la connexion électrique entre les première et deuxième sous-stations 20A, 20B et le rail 22, le courant de dégivrage I décrit une boucle passant par la ligne d'alimentation 10 de la première sous-station 20A vers la deuxième sous-station 20B, c'est-à-dire sur le tronçon T de la ligne d'alimentation 10, puis par le rail 22, de la deuxième sous-station 20B vers la première sous-station 20A, ainsi que cela est représenté sur la figure 2.

L'intensité I du courant de dégivrage circulant dans la ligne d'alimentation 10 sur le tronçon T est égale à :

$$I = \frac{\left[U_{CA} - U_{CB}\right]}{\left[Z_L + Z_R\right] \times d_{AB}} = \frac{D}{\left[Z_L + Z_R\right] \times d_{AB}}$$

où $Z_L$ est l'impédance linéique nominale de la ligne d'alimentation 10,
$Z_R$ est l'impédance linéique nominale du rail 22,
D est la différence de tension entre les sorties de la première sous-station 20A et de la deuxième sous-station 20B, et
$d_{AB}$ est la distance entre la première sous-station 20A et la deuxième sous-station 20B.

La valeur du courant de dégivrage I est choisie de manière à optimiser l'effet de dégivrage et notamment de manière à rendre le dégivrage le plus rapide possible, tout en évitant un échauffement trop important de la ligne d'alimentation 10, susceptible de l'endommager.

La valeur du courant de dégivrage I dépend notamment des conditions climatiques, de la nature du réseau ferroviaire 5, en particulier s'il s'agit d'un réseau de métro, de tramway ou de grandes lignes ferroviaires (réseau interrégional ou international), ainsi que de la nature de la ligne d'alimentation 10 et notamment des dimensions du fil constituant cette ligne d'alimentation 10, donc de l'impédance linéique $Z_L$ de la ligne d'alimentation 10.

Le courant de dégivrage I ne peut être supérieur à une valeur $I_{max}$ au-dessus de laquelle la ligne d'alimentation 10 et/ou les équipements associés pourraient être endommagés. Dans le cas où un dégivrage nécessiterait un courant supérieur à $I_{max}$, pour une durée de circulation du courant I donnée, l'opérateur choisit une durée de circulation du courant I supérieure, de manière à obtenir un effet de dégivrage équivalent sans dépasser la valeur de courant maximale $I_{max}$ admissible. Selon un exemple, la durée de circulation peut être comprise entre quelques minutes et plusieurs heures.

La circulation du courant de dégivrage I engendre un échauffement par effet Joule de la ligne d'alimentation 10 sur le tronçon T où passe le courant I et ainsi une fonte de la glace et/ou de la neige présentes sur ce tronçon T et donc son dégivrage.

Selon un mode de réalisation, le procédé de dégivrage selon l'invention comprend en outre une étape de mesure de la température $T_L$ sur la ligne d'alimentation ou de la température ambiante $T_a$ au voisinage de la ligne 10 à l'aide du capteur de température adapté, la différence de tension D étant établie si la température $T_L$ ou $T_a$ mesurée est inférieure à un seuil donné, pré-établi.

Le procédé selon l'invention est mis en oeuvre à distance par un opérateur, qui commande chacune des étapes du procédé, après avoir décidé, en fonction notamment des conditions climatiques, si un dégivrage était utile et choisi l'intensité du courant de dégivrage et la durée de circulation de ce courant.

Selon un mode de réalisation, ce procédé peut également être mis en oeuvre de manière automatisée. Dans ce cas, le réseau ferroviaire comprend en variante un module de commande apte à conclure à la nécessité d'un dégivrage et à choisir la valeur du courant de dégivrage I et la durée de circulation du courant I, notamment à partir des mesures de température réalisées par le capteur de température, puis à commander chacune des étapes du procédé énumérées ci-dessus, de manière à dégivrer la ligne d'alimentation.

Le procédé de dégivrage selon l'invention présente l'avantage de ne pas nécessiter la fourniture d'équipements additionnels spécifiques en vue du dégivrage de la ligne d'alimentation. En effet, le procédé selon l'invention fait uniquement appel aux sous-stations réversibles, qui sont présentes en permanence le long de la ligne d'alimentation, puisqu'elles servent à l'alimentation de la ligne d'alimentation.

Le procédé selon l'invention est en outre particulièrement simple à mettre en oeuvre, puisqu'il suffit de sélectionner, en fonction d'un courant de dégivrage désiré, des tensions de sortie adaptées des convertisseurs de certaines sous-stations pour obtenir un dégivrage de la ligne d'alimentation entre ces sous-stations.

Le procédé selon l'invention est également moins coûteux à mettre en oeuvre que les procédés de dégivrage connus, puisqu'il ne nécessite, ni de faire passer des trains toute la nuit, ni de mettre en oeuvre des équipements additionnels.

En outre, ce procédé présente une sécurité d'utilisation importante, puisqu'il peut être mis en oeuvre à distance sans nécessiter de personnel d'entretien au niveau du tronçon lui-même.

Selon une variante du convertisseur 25, celui-ci est un convertisseur deux quadrants.

Dans ce qui précède, le fonctionnement en mode fourniture de courant correspond au fonctionnement en mode redresseur de la sous-station réversible 20A, 20B. Le fonctionnement en mode récupération du courant correspond au fonctionnement en mode onduleur de la sous-station réversible 20A, 20B.

**Revendications**

1. Procédé de dégivrage d'une ligne d'alimentation électrique (10) de véhicules ferroviaires, ladite ligne (10) s'étendant entre au moins une première et une deuxième sous-stations (20A, 20B) aptes à fournir un courant électrique (I) circulant sur la ligne d'alimentation électrique (10), la première sous-station (20A) étant commandée dans un mode de fourniture de courant, pour fournir un courant électrique (I) à la ligne d'alimentation électrique (10) et la deuxième sous-station (20B) étant commandée dans un mode de récupération de courant, pour récupérer le courant électrique (I) de la ligne d'alimentation électrique (10) et le renvoyer sur un réseau d'alimentation électrique (15),

le procédé comprenant une étape d'établissement d'une différence de tension (D) entre les bornes de sortie des première et deuxième sous-stations (20A, 20B) de sorte qu'un courant (I) circule sur la ligne d'alimentation électrique (10) entre la première sous-station (20A) et la deuxième sous-station (20B) et que la chaleur produite par la circulation du courant (I) entraîne le dégivrage de la ligne d'alimentation (10) entre la première et la deuxième sous-stations (20A, 20B),

ledit procédé étant caractérisé en ce la ligne d'alimentation électrique est à courant continu et en ce que la première et la deuxième sous-stations (20A, 20B) sont réversibles.

2. Procédé de dégivrage selon la revendication 1, **caractérisé en ce qu'**il comprend une étape de choix et de commande de la différence de tension (D) entre les bornes de sortie des première et deuxième sous-stations (20A, 20B).

3. Procédé de dégivrage selon la revendication 1 ou 2, **caractérisé en ce que** la première sous-station (20A) et la deuxième sous-station (20B) comprennent chacune un convertisseur de puissance réversible (25), de sorte que la première sous-station (20A) et la deuxième sous-station (20B) sont aptes à fonctionner en mode de fourniture de courant ou en mode de récupération de courant et **en ce que** le procédé comprend une étape de commande du mode de fonctionnement de la première et de la deuxième sous-stations (20A, 20B), respectivement en mode de fourniture de courant et en mode de récupération de courant.

4. Procédé de dégivrage selon la revendication 3, **caractérisé en ce que** le convertisseur de puissance réversible (25) comprend un redresseur (35) et un onduleur (40), relié au redresseur (35) en anti-parallèle, et **en ce que** la première ou la deuxième sous-station (20A, 20B) fonctionne en mode onduleur lorsqu'elle est commandée en mode de récupération de courant et en mode redresseur lorsqu'elle est commandée en mode de fourniture de courant.

5. Procédé de dégivrage selon l'une quelconque des revendications 1 à 4, **caractérisé en ce que** chaque sous-station (20A, 20B) est connectée à la ligne d'alimentation (10) et à un rail (22) de sorte que le courant (I) circule en boucle en passant successivement par la sous-station (20A) commandée en mode de fourniture de courant, puis par la ligne d'alimentation (10), puis par la sous-station (20B) commandée en mode de récupération de courant, puis par le rail (22) pour revenir à la sous-station (20A) commandée en mode de fourniture de courant.

6. Procédé de dégivrage selon l'une des revendications 1 à 5, comprenant une étape de mesure de la température sur ou au voisinage de la ligne d'alimentation (10), la différence de tension (D) étant établie si la température mesurée est inférieure à un seuil pré-établi.

7. Procédé de dégivrage selon l'une quelconque des revendications 1 à 6, comprenant une étape de vérification de la circulation d'un véhicule ferroviaire entre les sous-stations (20A, 20B), la différence de tension (D) étant établie si aucun véhicule ferroviaire ne circule entre la première et la deuxième sous-stations (20A, 20B).

8. Procédé de dégivrage selon l'une quelconque des revendications 1 à 7, la ligne d'alimentation (10) s'étendant entre plus de deux sous-stations (20), le procédé comprenant une étape de choix de deux sous-stations (20A, 20B) à commander respectivement en mode de fourniture de courant et en mode de récupération de courant et une étape d'établissement d'une différence de tension (D) entre les bornes de sortie desdites sous-stations (20A, 20B) en fonction du tronçon (T) de la ligne (10) à dégivrer.

**Patentansprüche**

1. Verfahren zum Enteisen einer elektrischen Versorgungsleitung (10) von Schienenfahrzeugen, wobei sich die Leitung (10) zwischen mindestens einer ersten und einer zweiten Unterstation (20A, 20B) erstreckt, die dazu geeignet ist, einen elektrischen Strom (I), der auf der elektrischen Versorgungsleitung (10) fließt, zu liefern, wobei die erste Unterstation (20A) in einem Stromversorgungsmodus gesteuert wird, um der elektrischen Versorgungsleitung einen elektrischen Strom (I) zuzuführen (10) und die zweite Unterstation (20B) in einem Stromwiederherstellungsmodus gesteuert wird, um den elektrischen Strom (I) von der elektrischen Versorgungsleitung (10) zurückzugewinnen und ihn auf ein Stromversorgungsnetz zurücksenden (15), wobei das Verfahren einen Schritt des Herstellens einer Spannungsdifferenz (D) zwischen den Ausgangsanschlüssen der ersten und der zweiten Unterstation (20A, 20B) aufweist derart, dass ein Strom (I) zwischen der ersten Unterstation (20A) und der zweiten Unterstation (20B) auf der elektrischen Versorgungsleitung fließt und dass die durch den Stromfluss (I) erzeugte Wärme das Enteisen der Versorgungsleitung (10) zwischen der ersten und der zweiten Unterstation (20A, 20B) verursacht, wobei das Verfahren dadurch charakterisiert ist, dass die elektrische Versorgungsleitung eine Gleichstrom-Versorgungsleitung ist und dass die erste und die zweite Unterstation (20A, 20B) reversibel sind.

2. Enteisungsverfahren nach Anspruch 1, **dadurch gekennzeichnet, dass** es einen Schritt zum Auswählen und Steuern der Spannungsdifferenz (D) zwischen den Ausgangsanschlüssen der ersten und der zweiten Unterstation (20A, 20B) aufweist.

3. Enteisungsverfahren nach Anspruch 1 oder 2, **dadurch gekennzeichnet, dass** die erste Unterstation (20A) und die zweite Unterstation (20B) jeweils einen reversiblen Stromrichter (25) aufweisen derart, dass die erste Unterstation (20A) und die zweite Unterstation (20B) im Stromversorgungsmodus oder im Stromwiederherstellungsmodus betreibbar sind, und dadurch, dass das Verfahren einen Schritt des Steuerns des Betriebsmodus der ersten und der zweiten Unterstation (20A, 20B) in den Stromversorgungsmodus bzw. den Stromwiederherstellungsmodus aufweist.

4. Enteisungsverfahren nach Anspruch 3, **dadurch gekennzeichnet, dass** der reversible Leistungswandler (25) einen Gleichrichter (35) und einen Wechselrichter (40) aufweist, die antiparallel mit dem Gleichrichter (35) verbunden sind, und dadurch, dass die erste oder die zweite Unterstation (20A, 20B) im Wechselrichtermodus arbeitet, wenn sie in den Stromwiederherstellungsmodus gesteuert wird, und im Gleichrichtermodus arbeitet, wenn sie in den Stromversorgungsmodus gesteuert wird.

5. Enteisungsverfahren nach einem der Ansprüche 1 bis 4, **dadurch gekennzeichnet, dass** jede Unterstation (20A, 20B) mit der Versorgungsleitung (10) und einer Schiene (22) verbunden ist, sodass der Strom (I) im Kreis fließt, wobei er nacheinander die in den Stromversorgungsmodus gesteuerte Unterstation (20A), dann die Versorgungsleitung (10), dann die in den Wiederherstellungsmodus gesteuerte Unterstation (20B) und dann die Schiene (22) durchläuft, um zur Unterstation (20A) zurückzukehren, die in den Stromversorgungsmodus gesteuert ist.

6. Enteisungsverfahren nach einem der Ansprüche 1 bis 5, aufweisend einen Schritt zum Messen der Temperatur auf oder in der Nähe der Versorgungsleitung (10), wobei die Spannungsdifferenz (D) hergestellt wird, wenn die gemessene Temperatur niedriger als eine vorher festgelegte Schwelle ist.

7. Enteisungsverfahren nach einem der Ansprüche 1 bis 6, aufweisend einen Schritt des Überprüfens des Fahrens eines Schienenfahrzeugs zwischen den Unterstationen (20A, 20B), wobei die Spannungsdifferenz (D) hergestellt wird, wenn kein Fahrzeug zwischen der ersten und der zweiten Unterstation (20A, 20B) fährt.

8. Enteisungsprozess nach einem der Ansprüche 1 bis 7, wobei sich die Versorgungsleitung (10) zwischen mehr als zwei Unterstationen (20) erstreckt, wobei das Verfahren einen Schritt des Auswählens von zwei Unterstationen (20A, 20B), die in den Stromversorgungsmodus bzw. in den Stromwiederherstellungsmodus gesteuert werden, und einen Schritt des Erstellens einer Spannungsdifferenz (D) zwischen den Ausgangsanschlüssen der Unterstationen (20A, 20B) in Abhängigkeit des Abschnitts (T) der zu enteisenden Leitung (10) aufweist.

**Claims**

1. A method for deicing an electrical power supply line (10) for railway vehicles, said line (10) extending between at least first and second substations (20A, 20B) able to supply an electrical current (I) circulating on the electrical power line (10), the first substation (20A) being controlled in a current supply mode, to supply an electrical current (I) to the electrical power supply line (10) and the second substation (20B) being controlled in a current recovery mode, to recover the electrical current (I) from the electrical power supply line (10) and send it back over an electrical power supply network (15),

said method comprising a step for establishing a voltage difference (D) between the output terminals of the first and second substations (20A, 20B) such that a current (I) circulates on the electrical power supply line (10) between the first substation (20A) and the second substation (20B) and the heat produced by the circulation of the current (I) causes the deicing of the power supply line (10) between the first and second substations (20A, 20B),

said method being **characterized in that** the electrical power supply line (10) is direct current and **in that** the first and second substations (20A, 20B) are reversible.

2. The deicing method according to claim 1, **characterized in that** it comprises a step for choosing and controlling the voltage difference (D) between the output terminals of the first and second substations (20A, 20B).

3. The deicing method according to claim 1 or 2, **characterized in that** the first substation (20A) and the second substation (20B) each comprise a reversible power converter (25), such that the first substation (20A) and the second substation (20B) are capable of operating in current supply mode or current recovery mode and **in that** the method comprises a step for controlling the operating mode of the first and second substations (20A, 20B), in current supply mode and current recovery mode, respectively.

4. The deicing method according to claim 3, **characterized in that** the reversible power converter (25) comprises a rectifier (35) and an inverter (40), connected to the rectifier (35) in anti-parallel, and **in that** the first or second substation (20A, 20B) operates in inverter mode when it is controlled in current recovery mode and in rectifier mode when it is controlled in current supply mode.

5. The deicing method according to any one of claims 1 to 4, **characterized in that** each substation (20A, 20B) is connected to the power supply line (10) and to a rail (22) such that the current (I) circulates in a loop passing successively through the substation (20A) controlled in current supply mode, then through the power supply line (10), then through the substation (20B) controlled in current recovery mode, then through the rail (22) to return to the substation (20A) controlled in current supply mode.

6. The deicing method according to one of claims 1 to 5, comprising a step for measuring the temperature on or near the power supply line (10), the voltage difference (D) being established if the measured temperature is below a pre-established threshold;

7. The deicing method according to any one of claims 1 to 6, comprising a step for verifying the circulation of a railway vehicle between the substations (20A, 20B), the voltage difference (D) being established if no railway vehicle is circulating between the first and second substations (20A, 20B).

8. The deicing method according to any one of claims 1 to 7, the power supply line (10) extending between more than two substations (20), the method comprises a step for choosing two substations (20A, 20B) to be controlled in current supply mode and current recovery mode, respectively, and a step for establishing a voltage difference (D) between the output terminals of said substations (20A, 20B) as a function of the segment (T) of the line (10) to be deiced.

## FIG.1

## FIG.2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 10337937 A1
- EP 1985490 A